# EUROPÄISCHE PATENTSCHRIFT

(11) **EP 1 518 911 B1**
(45) Veröffentlichungstag und Bekanntmachung des Hinweises auf die Patenterteilung: **02.05.2007**
(21) Anmeldenummer: 03021273.2
(22) Anmeldetag: 19.09.2003
(51) Int. Cl.: C09J 175/04, C09K 3/10

(54) **Einkomponentige selbstklebende Dichtmasse**
Single component self-adhesive sealing composition
Composition de scellement autocollante à un composant

(43) Veröffentlichungstag der Anmeldung: 30.03.2005
(73) Patentinhaber: BASF Aktiengesellschaft, 67056 Ludwigshafen (DE)
(72) Erfinder: Flick, Dieter, 67459 Böhl-Iggelheim (DE); Centner, Alexander, 67127 Rödersheim-Gronau (DE); Wichmann, Christina, 67165 Waldsee (DE)

(56) Entgegenhaltungen:
- EP-A- 0 712 877
- WO-A-99/50325
- US-A- 4 680 233
- US-A- 5 486 570

## Beschreibung

Die vorliegende Erfindung betrifft eine einkomponentige selbstklebende Dichtmasse, wobei die Dichtmasse im Nasszustand im wesentlichen frei von flüchtigen organischen Verbindungen und im Trockenzustand selbstklebend ist. Weiterhin betrifft die Erfindung die Herstellung und Verwendung dieser Dichtmasse sowie mit dieser Dichtmasse hergestellte Verbundstoffe.

Die Verfahren der Verbindungstechnik werden allgemein in Kleben und Dichten unterteilt. Für Kleb- und Dichtstoffe werden üblicherweise dieselben Grundstoffe verwendet. Die spezifischen Eigenschaften werden über die Mischungsverhältnisse der Grundstoffe eingestellt. So handelt es sich bei Klebstoffen nach DIN 16920 um nichtmetallische, die Fügeteile durch Flächenhaftung und innere Festigkeit (Adhäsion und Kohäsion) verbinden können, und bei Dichtstoffen nach DIN 52460 um plastisch oder elastisch bleibende Massen zur Abdichtung undichter Stellen, sogenannter Fugen.

Die Patentanmeldung EP-A1-0 712 877 beschreibt Dichtmassen auf Basis von Polyurethandispersionnen.

Die meisten bekannten Dichtstoffe sind in trockenem Zustand nicht mehr klebrig. Diese Eigenschaft ist erwünscht, weil dadurch ein Anhaften von Schmutz vermieden wird. Trotzdem besteht ein Bedarf nach Dichtstoffen, die auch noch in trockenem Zustand selbstklebend sind. So beschreibt die Patentanmeldung DE-A-100 00 940 eine im trockenen Zustand selbstklebende Dichtmasse auf Basis von Vinylpolymeren.

Aufgabe der vorliegenden Erfindung war die Bereitstellung von Dichtmassen, die im trockenen Zustand selbstklebend sind.

Zusätzlich sollen die obengenannten Dichtmassen im nassen Zustand frei von flüchtigen organischen Verbindungen sein, im trockenen Zustand eine verbesserte Schälhaftung zeigen und eine wirksame Abdichtung erreichen.

Die Aufgabe wurde durch eine einkomponentige Dichtmasse auf Basis von Polyurethandispersionen gelöst.

Die erfindungsgemäße Dichtmasse enthält im Nasszustand
i. 35 bis 50 Gew.-%, wenigstens einer Polyurethandispersion, wobei die Polyurethandispersion beispielsweise einen Feststoffanteil von 30 bis 70 Gew.-%, vorzugsweise 35 bis 50 Gew.-%, aufweist,
ii. 5 bis 20 Gew.-%, eines oder mehrerer Polyacrylat-Weichharze als organischen Füllstoff,
iii. 15 bis 40 Gew.-%, eines oder mehrerer zusätzlicher organischer Füllstoffe,
iv. 20 bis 30 Gew.-%, eines oder mehrerer anorganischer Füllstoffe,
v. 2 bis 3 Gew.-%, eines oder mehrerer zusätzlicher anorganischer Füllstoffe als Thixotropierungsmittel,
vi. 0,1 bis 1 Gew.-%, eines oder mehrerer Verdicker,
vii. 0 bis 1 Gew.-%, eines oder mehrerer Pigmente und
viii. 0 bis 5 Gew.-% weitere Hilfsstoffe,
wobei das Verhältnis von i zu (ii+iii+iv) von 0,6 bis 1, beträgt.

Die Polyurethandispersion (i) ist vorzugsweise wässrig und enthält mindestens ein Polyurethan. Daneben können weitere polymere Bindemittel vorhanden sein.

Die Polyurethane bestehen überwiegend vorzugsweise aus Polyisocyanaten, insbesondere Diisocyanaten einerseits und, als Reaktionspartner, Polyesterdiole, Polyetherdiole oder deren Gemische andererseits.

Vorzugsweise ist das Polyurethan zu mindestens 40 Gew.-%, besonders bevorzugt zu mindestens 60 Gew.-% und ganz besonders bevorzugt zu mindestens 80 Gew.-% aus Diisocyanaten, Polyetherdiolen und/oder Polyesterdiolen aufgebaut.

Vorzugsweise hat das Polyurethan einen Erweichungspunkt oder Schmelzpunkt im Bereich von -50 bis 150°C, besonders bevorzugt von 0 bis 100°C, und ganz besonders bevorzugt von 10 bis 90°C.

Besonders bevorzugt hat das Polyurethan einen Schmelzpunkt im vorstehenden Temperaturbereich.

Bevorzugt enthält das Polyurethan dazu Polyesterdiole in einer Menge von mehr als 10 Gew.-%, bezogen auf das Polyurethan.

Insgesamt ist das Polyurethan vorzugsweise aufgebaut aus:
a) Diisocyanaten,
b) Diolen, von denen
   b₁) 10 bis 100 mol-%, bezogen auf die Gesamtmenge der Diole (b), ein Molekulargewicht von 500 bis 5000 g/mol aufweisen,
   b₂) 0 bis 90 mol-%, bezogen auf die Gesamtmenge der Diole (b), ein Molekulargewicht von 60 bis 500 g/mol aufweisen,
c) von den Monomeren (a) und (b) verschiedene Monomere mit wenigstens einer Isocyanatgruppe oder wenigstens einer gegenüber Isocyanatgruppen reaktiven Gruppe, die darüber hinaus wenigstens eine hydrophile Gruppe oder eine potentiell hydrophile Gruppe tragen, wodurch die Wasserdispergierbarkeit der Polyurethane bewirkt wird,
d) gegebenenfalls weiteren von den Monomeren (a) bis (c) verschiedenen mehrwertigen Verbindungen mit reaktiven Gruppen, bei denen es sich um alkoholische Hydroxylgruppen, primäre oder sekundäre Aminogruppen oder Isocyanatgruppen handelt und
e) gegebenenfalls von den Monomeren (a) bis (d) verschiedenen einwertigen Verbindungen mit einer reaktiven Gruppe, bei der es sich um eine alkoholische Hydroxylgruppe, eine primäre oder sekundäre Aminogruppe oder eine lsocyanatgruppe handelt.

Insbesondere zu nennen sind als Monomere (a) Diisocyanate X(NCO)₂, wobei X für einen aliphatischen Kohlenwasserstoffrest mit 4 bis 15 Kohlenstoffatomen, einen cycloaliphatischen oder aromatischen Kohlenwasserstoffrest mit 6 bis 15 Kohlenstoffatomen oder einen araliphatischen Kohlenwasserstoffrest mit 7 bis 15 Kohlenstoffatomen steht. Beispiele derartiger Diisocyanate sind Tetramethylendiisocyanat, Hexamethylendiisocyanat, Dodecamethylendiisocyanat, 1,4-Diisocyanatocyclohexan, 1-Isocyanato-3,5,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2, 6-Diisocyanatotoluol, 4,4'-Diisocyanato-diphenylmethan, 2,4'-Diisocyanato-diphenylmethan, p-Xylylendiisocyanat, Tetramethylxylylendiisocyanat (TMXDI), die Isomeren des Bis-(4-isocyanatocyclohexyl)methans (HMDI) wie das trans/trans-, das cis/cis- und das cis/trans-Isomere sowie aus diesen Verbindungen bestehende Gemische.

Derartige Diisocyanate sind im Handel erhältlich.

Als Gemische dieser Isocyanate sind besonders die Mischungen der jeweiligen Strukturisomeren von Diisocyanatotoluol und Diisocyanato-diphenylmethan von Bedeutung.

Insbesondere ist die Mischung aus 80 mol-% 2,4-Diisocyanatotoluol und 20 mol-% 2,6-Diisocyanatotoluol geeignet. Weiterhin sind die Mischungen von aromatischen Isocyanaten wie 2,4-Diisocyanatotoluol und/oder 2,6-Diisocyanatotoluol mit aliphatischen oder cycloaliphatischen Isocyanaten wie Hexamethylendiisocyanat oder IPDI besonders vorteilhaft, wobei das bevorzugte Mischungsverhältnis der aliphatischen zu aromatischen Isocyanate 4 : 1 bis 1 : 4 beträgt.

Zum Aufbau der Polyurethane kann man als Verbindungen außer den vorgenannten auch Isocyanate einsetzen, die neben den freien Isocyanatgruppen weitere verkappte Isocyanatgruppen, beispielsweise Uretdiongruppen tragen.

Im Hinblick auf gute Filmbildung und Elastizität kommen als Diole (b) vornehmlich höhermolekulare Diole (b₁) in Betracht, die ein Molekulargewicht von etwa 500 bis 5000, vorzugsweise von etwa 1000 bis 3000 g/mol haben. Es handelt sich hierbei um das zahlenmittlere Molgewicht Mₙ. Mₙ ergibt sich durch Bestimmung der Anzahl der Endgruppen (OH-Zahl).

Bei den Diolen (b₁) kann es sich um Polyesterpolyole handeln, die beispielsweise aus Ullmanns Encyklopädie der technischen Chemie, 4. Auflage, Band 19, S. 62 bis 65 bekannt sind. Bevorzugt werden Polyesterpolyole eingesetzt, die durch Umsetzung von zweiwertigen Alkoholen mit zweiwertigen Carbonsäuren erhalten werden. Anstelle der freien Polycarbonsäuren können auch die entsprechenden Polycarbonsäureanhydride oder entsprechende Polycarbonsäureester von niederen Alkoholen oder deren Gemische zur Herstellung der Polyesterpolyole verwendet werden. Die Polycarbonsäuren können aliphatisch, cycloaliphatisch, araliphatisch, aromatisch oder heterocyclisch sein und gegebenenfalls, beispielsweise durch Halogenatome, substituiert und/oder ungesättigt sein. Als Beispiele hierfür seien genannt: Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren. Bevorzugt sind Dicarbonsäuren der allgemeinen Formel HOOC- (CH₂)_{y}-COOH, wobei y eine Zahl von 1 bis 20, bevorzugt eine gerade Zahl von 2 bis 20 ist, beispielsweise Bernsteinsäure, Adipinsäure, Sebacinsäure und Dodecandicarbonsäure.

Als mehrwertige Alkohole kommen beispielsweise Ethylenglykol, Propan-1,2- diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methyl-propan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-(CH₂)ₓ-OH, wobei x eine Zahl von 1 bis 20, bevorzugt eine gerade Zahl von 2 bis 20 ist. Beispiele hierfür sind Ethylenglycol, Butan-1,4-diol, Hexan-1,6-diol, Octan-1,8-diol und Dodecan-1,12-diol. Weiterhin bevorzugt ist Neopentylglykol.

Ferner kommen gegebenenfalls auch Polycarbonat-Diole, wie sie beispielsweise durch Umsetzung von Phosgen mit einem Überschuss von den als Aufbaukomponenten für die Polyesterpolyole genannten niedermolekularen Alkohole erhalten werden können, in Betracht.

Gegebenenfalls können auch Polyesterdiole auf Lacton-Basis mitverwendet werden, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Als Lactone kommen bevorzugt solche in Betracht, die sich von Verbindungen der allgemeinen Formel HO-(CH₂)_{z}-COOH ableiten, wobei z eine Zahl von 1 bis 20 ist und ein H-Atom einer Methyleneinheit auch durch einen C₁- bis C₄-Alkylrest substituiert sein kann. Beispiele sind ε-Caprolacton, β-Propiolacton, γ-Butyrolacton und/oder Methyl-ε-caprolacton sowie deren Gemische. Geeignete Starterkomponenten sind beispielsweise die vorstehend als Aufbaukomponente für die Polyesterpolyole genannten niedermolekularen zweiwertigen Alkohole. Die entsprechenden Polymerisate des ε-Caprolactons sind besonders bevorzugt. Auch niedere Polyesterdiole oder Polyetherdiole können als Starter zur Herstellung der Lacton-Polymerisate eingesetzt sein. Anstelle der Polymerisate von Lactonen können auch die entsprechenden, chemisch äquivalenten Polykondensate der den Lactonen entsprechenden Hydroxycarbonsäuren, eingesetzt werden.

Polyetherdiole sind insbesondere durch Polymerisation von Ethylenoxid, Propylenoxid, Butylenoxid, Tetrahydrofuran, Styroloxid oder Epichlorhydrin mit sich selbst, beispielsweise in Gegenwart von BF₃ oder durch Anlagerung dieser Verbindungen gegebenenfalls im Gemisch oder nacheinander, an Startkomponenten mit reaktionsfähigen Wasserstoffatomen, wie Alkohole oder Amine, beispielsweise Wasser, Ethylenglykol, Propan-1,2-diol, Propan-1,3-diol, 2,2-Bis(4-hydroxyphenyl)-propan oder Anilin erhältlich. Besonders bevorzugt sind Polypropylenoxid, Polytetrahydrofuran eines Molekulargewichts (Mₙ) von 240 bis 5000, und vor allem 500 bis 4500.

Unter Diole (b₁) fallen nur Polyetherdiole, die zu weniger als 20 Gew.-% aus Ethylenoxid bestehen. Polyetherdiole mit mindestens 20 Gew.-% sind hydrophile Polyetherdiole, welche zu Monomeren (c) zählen.

Gegebenenfalls können auch Polyhydroxyolefine mitverwendet werden, bevorzugt solche mit 2 endständigen Hydroxylgruppen, beispielsweise α,-ω-Dihydroxypolybutadien, α,-ω-Dihydroxypolymethacrylester oder α,-ω-Dihydroxypolyacrylester als Monomere (c₁). Solche Verbindungen sind beispielsweise aus der EP-A-0 622 378 bekannt. Weitere geeignete Polyole sind Polyacetale, Polysiloxane und Alkydharze.

Bevorzugt handelt es sich bei mindestens 95 mol-% der Diole (b₁) um Polyetherdiole. Besonders bevorzugt werden als Diole (b₁) ausschließlich Polyetherdiole verwendet.

Die Härte und der Elastizitätsmodul der Polyurethane lassen sich erhöhen, wenn als Diole (b) neben den Diolen (b₁) noch niedermolekulare Diole (b₂) mit einem Molekulargewicht (Mₙ) von etwa 60 bis 500, vorzugsweise von 62 bis 200 g/mol, eingesetzt werden.

Als Diole (b₂) werden vor allem die Aufbaukomponenten der für die Herstellung von Polyesterpolyolen genannten kurzkettigen Alkandiole eingesetzt, wobei die unverzweigten Diole mit 2 bis 12 C-Atomen und einer gradzahligen Anzahl von C-Atomen sowie Pentan-1,5-diol und Neopentylglykol bevorzugt werden.

Als Diole b₂) kommen beispielsweise Ethylenglykol, Propan-1,2-diol, Propan-1,3-diol, Butan-1,3-diol, Buten-1,4-diol, Butin-1,4-diol, Pentan-1,5-diol, Neopentylglykol, Bis-(hydroxymethyl)-cyclohexane wie 1,4-Bis-(hydroxymethyl)cyclohexan, 2-Methylpropan-1,3-diol, Methylpentandiole, ferner Diethylenglykol, Triethylenglykol, Tetraethylenglykol, Polyethylenglykol, Dipropylenglykol, Polypropylenglykol, Dibutylenglykol und Polybutylenglykole in Betracht. Bevorzugt sind Alkohole der allgemeinen Formel HO-(CH₂)ₓ-OH, wobei x eine Zahl von 1 bis 20, bevorzugt eine gerade Zahl von 2 bis 20 ist. Beispiele hierfür sind Ethylenglykol, Butan-1,4-diol, Hexan-1,6-diol, Octan-1,8-diol und Dodecan-1,12-diol. Weiterhin bevorzugt ist Neopentylglykol.

Bevorzugt beträgt der Anteil der Diole (b₁), bezogen auf die Gesamtmenge der Diole (b) 10 bis 100 mol-% und der Anteil der Monomere (b₂), bezogen auf die Gesamtmenge der Diole (b) 0 bis 90 mol-%. Besonders bevorzugt beträgt das Verhältnis der Diole (b₁) zu den Diolen (b₂) 0,1 : 1 bis 5 : 1, besonders bevorzugt 0,2 : 1 bis 2 : 1.

Um die Wasserdispergierbarkeit der Polyurethane zu erreichen, enthalten die Polyurethane von den Komponenten (a), (b) und (d) verschiedene Monomere (c), die wenigstens eine Isocyanatgruppe oder wenigstens eine gegenüber Isocyanatgruppen reaktive Gruppe und darüberhinaus wenigstens eine hydrophile Gruppe oder eine Gruppe, die sich in eine hydrophile Gruppe überführen lässt, tragen, als Aufbaukomponente. Im folgenden Text wird der Begriff "hydrophile Gruppen oder potentiell hydrophile Gruppen" mit "(potentiell) hydrophile Gruppen" abgekürzt. Die (potentiell) hydrophilen Gruppen reagieren mit Isocyanaten wesentlich langsamer als die funktionellen Gruppen der Monomere, die zum Aufbau der Polymerhauptkette dienen.

Der Anteil der Komponenten mit (potentiell) hydrophilen Gruppen an der Gesamtmenge der Komponenten (a), (b), (c), (d) und (e) wird im allgemeinen so bemessen, dass die Molmenge der (potentiell) hydrophilen Gruppen, bezogen auf die Gewichtsmenge aller Monomere (a) bis (e), 30 bis 1000, bevorzugt 50 bis 500 und besonders bevorzugt 80 bis 300 mmol/kg beträgt.

Bei den (potentiell) hydrophilen Gruppen kann es sich um nichtionische oder bevorzugt um (potentiell) ionische hydrophile Gruppen handeln.

Als nichtionische hydrophile Gruppen kommen insbesondere Polyethylenglykolether aus vorzugsweise 5 bis 100, bevorzugt 10 bis 80 Ethylenoxid-Wiederholungseinheiten, in Betracht. Der Gehalt an Polyethylenoxid-Einheiten beträgt im allgemeinen 0 bis 10, bevorzugt 0 bis 6 Gew.-%, bezogen auf die Gewichtsmenge aller Monomere (a) bis (e).

Bevorzugte Monomere mit nichtionischen hydrophilen Gruppen sind Polyethylenoxiddiole mit mindestens 20 Gew.-% Ethylenoxid, Polyethylenoxidmonoole sowie die Reaktionsprodukte aus einem Polyethylenglykol und einem Diisocyanat, die eine endständig veretherten Polyethylenglykolrest tragen. Derartige Diisocyanate sowie Verfahren zu deren Herstellung sind in den Patentschriften US-3,905,929 und US-3,920,598 angegeben.

Ionische hydrophile Gruppen sind vor allem anionische Gruppen wie die Sulfonat-, die Carboxylat- und die Phosphatgruppe in Form ihrer Alkalimetall- oder Ammoniumsalze sowie kationische Gruppen wie Ammonium-Gruppen, insbesondere protonierte tertiäre Aminogruppen oder quartäre Ammoniumgruppen.

Potentiell ionische hydrophile Gruppen sind vor allem solche, die sich durch einfache Neutralisations-, Hydrolyse- oder Quaternisierungsreaktionen in die oben genannten ionischen hydrophilen Gruppen überführen lassen, also beispielsweise Carbonsäuregruppen oder tertiäre Aminogruppen.

(Potentiell) ionische Monomere (c) sind beispielsweise in Ullmanns Encyklopädie der technischen Chemie, 4. Auflage, Band 19, S.311-313 und beispielsweise in der DE-A 1 495 745 ausführlich beschrieben.

Als (potentiell) kationische Monomere (c) sind vor allem Monomere mit tertiären Aminogruppen von besonderer praktischer Bedeutung, beispielsweise: Tris-(hydroxyalkyl)-amine, N,N'-Bis(hydroxyalkyl)-alkylamine, N-Hydroxyalkyl-dialkylamine, Tris-(aminoalkyl)-amine, N,N'-Bis(aminoalkyl)-alkylamine, N-Aminoalkyl-dialkylamine, wobei die Alkylreste und Alkandiyl-Einheiten dieser tertiären Amine unabhängig voneinander aus 1 bis 6 Kohlenstoffatomen bestehen. Weiterhin kommen tertiäre Stickstoffatome aufweisende Polyether mit vorzugsweise zwei endständigen Hydroxylgruppen, wie sie beispielsweise durch Alkoxylierung von zwei an Aminstickstoff gebundene Wasserstoffatome aufweisende Amine, beispielsweise Methylamin, Anilin oder N,N'-Dimethylhydrazin, in an sich üblicher Weise zugänglich sind, in Betracht. Derartige Polyether weisen im allgemeinen ein zwischen 500 und 6000 g/mol liegendes Molgewicht (Mₙ) auf.

Diese tertiären Amine werden entweder mit Säuren, bevorzugt starken Mineralsäuren wie Phosphorsäure, Schwefelsäure, Halogenwasserstoffsäuren oder starken organischen Säuren oder durch Umsetzung mit geeigneten Quaternisierungsmitteln wie C₁-bis C₆-Alkylhalogeniden oder Benzylhalogeniden, beispielsweise Bromiden oder Chloriden, in die Ammoniumsalze überführt.

Als Monomere mit (potentiell) anionischen Gruppen kommen üblicherweise aliphatische, cycloaliphatische, araliphatische oder aromatische Carbonsäuren und Sulfonsäuren in Betracht, die mindestens eine alkoholische Hydroxylgruppe oder mindestens eine primäre oder sekundäre Aminogruppe tragen. Bevorzugt sind Dihydroxyalkylcarbonsäuren, vor allem mit 3 bis 10 Kohlenstoffatomen, wie sie auch in der US-3,412,054 beschrieben sind. Insbesondere sind Verbindungen der allgemeinen Formel (c₁) 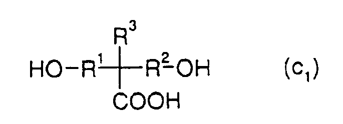 in welcher R¹ und R² für eine C₁- bis C₄-Alkandiyl-(Einheit) und R³ für eine C₁- bis C₄-Alkyl-(Einheit) steht und vor allem Dimethylolpropionsäure (DMPA) bevorzugt.

Weiterhin eignen sich entsprechende Dihydroxysulfonsäuren und Dihydroxyphosphonsäuren wie 2,3-Dihydroxypropanphosphonsäure.

Ansonsten geeignet sind Dihydroxylverbindungen mit einem Molekulargewicht über 500 bis 10000 g/mol mit mindestens 2 Carboxylatgruppen, die aus der DE-A 3 911 827 bekannt sind. Sie sind durch Umsetzung von Dihydroxylverbindungen mit Tetracarbonsäuredianhydriden wie Pyromellitsäuredianhydrid oder Cyclopentantetracarbonsäuredianhydrid im Molverhältnis 2 : 1 bis 1,05 : 1 in einer Polyadditionsreaktion erhältlich. Als Dihydroxylverbindungen sind insbesondere die als Kettenverlängerer aufgeführten Diole (b₂) sowie die Diole (b₁) geeignet.

Als Monomere (c) mit gegenüber Isocyanaten reaktiven Aminogruppen kommen Aminocarbonsäuren wie Lysin, β-Alanin oder die in der DE-A 2 034 479 genannten Addukte von aliphatischen diprimären Diaminen an a,β-ungesättigte Carbon- oder Sulfonsäuren in Betracht.

Solche Verbindungen gehorchen beispielsweise der Formel (c₂)

H₂N-R⁴-NH-R⁵-X (c₂)

in der
- R⁴ und R⁵ unabhängig voneinander für eine C₁- bis C₆-Alkandiyl-Einheit, bevorzugt Ethylen
und X für COOH oder SO₃H stehen.

Besonders bevorzugte Verbindungen der Formel (c₂) sind die N-(2-Aminoethyl)-2-aminoethancarbonsäure sowie die N-(2-Aminoethyl)-2-aminoethansulfonsäure bzw. die entsprechenden Alkalisalze, wobei Na als Gegenion besonders bevorzugt ist.

Weiterhin besonders bevorzugt sind die Addukte der oben genannten aliphatischen diprimären Diamine an 2-Acrylamido-2-methylpropansulfonsäure, wie sie beispielsweise in der DE-B 1 954 090 beschrieben sind.

Sofern Monomere mit potentiell ionischen Gruppen eingesetzt werden, kann deren Überführung in die ionische Form vor, während, jedoch vorzugsweise nach der isocyanat-Polyaddition erfolgen, da sich die ionischen Monomeren in der Reaktionsmischung häufig nur schwer lösen. Besonders bevorzugt liegen die Sulfonat- oder Carboxylatgruppen in Form ihrer Salze mit einem Alkallion oder einem Ammoniumion als Gegenion vor.

Die Monomere (d), die von den Monomeren (a) bis (c) verschieden sind und welche gegebenenfalls auch Bestandteile des Polyurethans sind, dienen im allgemeinen der Vernetzung oder der Kettenverlängerung. Es sind im allgemeinen mehr als zweiwertige nicht-phenolische Alkohole, Amine mit 2 oder mehr primären und/oder sekundären Aminogruppen sowie Verbindungen, die neben einer oder mehreren alkoholischen Hydroxylgruppen eine oder mehrere primäre und/oder sekundäre Aminogruppen tragen.

Alkohole mit einer höheren Wertigkeit als 2, die zur Einstellung eines gewissen Verzweigungs- oder Vernetzungsgrades dienen können, sind beispielsweise Trimethylolpropan, Glycerin oder Zucker.

Ferner kommen Monoalkohole in Betracht, die neben der Hydroxyl-Gruppe eine weitere gegenüber Isocyanaten reaktive Gruppe tragen wie Monoalkohole mit einer oder mehreren primären und/oder sekundären Aminogruppen, beispielsweise Monoethanolamin.

Polyamine mit 2 oder mehr primären und/oder sekundären Aminogruppen werden vor allem dann eingesetzt, wenn die Kettenverlängerung bzw. Vernetzung in Gegenwart von Wasser stattfinden soll, da Amine in der Regel schneller als Alkohole oder Wasser mit Isocyanaten reagieren. Das ist häufig dann erforderlich, wenn wässerige Dispersionen von vernetzten Polyurethanen oder Polyurethanen mit hohem Molgewicht gewünscht werden. In solchen Fällen geht man so vor, dass man Prepolymere mit lsocyanatgruppen herstellt, diese rasch in Wasser dispergiert und anschließend durch Zugabe von Verbindungen mit mehreren gegenüber Isocyanaten reaktiven Aminogruppen kettenverlängert oder vernetzt.

Hierzu geeignete Amine sind im allgemeinen polyfunktionelle Amine des Molgewichtsbereiches von 32 bis 500 g/mol, vorzugsweise von 60 bis 300 g/mol, welche mindestens zwei Aminogruppen, ausgewählt aus der Gruppe der primären und sekundären Aminogruppen, enthalten. Beispiele hierfür sind Diamine wie Diaminoethan, Diaminopropane, Diaminobutane, Diaminohexane, Piperazin, 2,5-Dimethylpiperazin, Amino-3-aminomethyl-3,5,5-trimethyl-cyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie Diethylentriamin oder 1,8-Diamino-4-aminomethyloctan.

Die Amine können auch in blockierter Form, z.B. in Form der entsprechenden Ketimine (siehe beispielsweise CA-A 1 129 128), Ketazine (siehe beispielsweise US-4,269,748) oder Aminsalze (siehe beispielsweise US-4,292,226) eingesetzt werden. Auch Oxazolidine, wie sie beispielsweise in der US-4,192,937 verwendet werden, stellen verkappte Polyamine dar, die für die Herstellung der erfindungsgemäßen Polyurethane zur Kettenverlängerung der Prepolymeren eingesetzt werden können. Bei der Verwendung derartiger verkappter Polyamine werden diese im allgemeinen mit den Prepolymeren in Abwesenheit von Wasser vermischt und diese Mischung anschließend mit dem Dispersionswasser oder einem Teil des Dispersionswassers vermischt, so dass hydrolytisch die entsprechenden Polyamine freigesetzt werden.

Bevorzugt werden Gemische von Di- und Triaminen verwendet, besonders bevorzugt Gemische von Isophorondiamin (IPDA) und Diethylentriamin (DETA).

Die Polyurethane enthalten bevorzugt 1 bis 30, besonders bevorzugt 4 bis 25 mol-%, bezogen auf die Gesamtmenge der Komponenten (b) und (d) eines Polyamins mit mindestens 2 gegenüber Isocyanaten reaktiven Aminogruppen als Monomere (d).

Für den gleichen Zweck können auch als Monomere (d) höher als zweiwertige Isocyanate eingesetzt werden. Handelsübliche Verbindungen sind beispielsweise das Isocyanurat oder das Biuret des Hexamethylendiisocyanats.

Monomere (e), die gegebenenfalls mitverwendet werden, sind Monoisocyanate, Monoalkohole und monoprimäre und -sekundäre Amine. Im allgemeinen beträgt ihr Anteil maximal 10 mol-%, bezogen auf die gesamte Molmenge der Monomere. Diese monofunktionellen Verbindungen tragen üblicherweise weitere funktionelle Gruppen wie olefinische Gruppen oder Carbonylgruppen und dienen zur Einführung von funktionellen Gruppen in das Polyurethan, die die Dispergierung bzw. die Vernetzung oder weitere polymeranaloge Umsetzung des Polyurethans ermöglichen. In Betracht kommen hierfür Monomere wie Isopropenyl-α,α-dimethylbenzylisocyanat (TMI) und Ester von Acryl- oder Methacrylsäure wie Hydroxyethylacrylat oder Hydroxyethylmethacrylat.

Diese Monomerkombination wird in hervorragender Weise ergänzt als Komponente (c) durch Diaminosulfonsäure-Alkali-Salze; ganz besonders durch die N-(2-Aminoethyl)-2-aminoethansulfonsäure bzw. ihre entsprechenden Alkalisalze, wobei das Na-Salz am besten geeignet ist, und eine Mischung von DETA/IPDA als Komponente (d).

Auf dem Gebiet der Polyurethanchemie ist allgemein bekannt, wie das Molekulargewicht der Polyurethane durch Wahl der Anteile der miteinander reaktiven Monomere sowie des arithmetischen Mittels der Zahl der reaktiven funktionellen Gruppen pro Molekül eingestellt werden kann.

Normalerweise werden die Komponenten (a) bis (e) sowie ihre jeweiligen Molmengen so gewählt, dass das Verhältnis A : B mit -
- A: der Molmenge an Isocyanatgruppen und
- B: der Summe aus der Molmenge der Hydroxylgruppen und der Molmenge der funktionellen Gruppen, die mit Isocyanaten in einer Additionsreaktion reagieren können

0,5 : 1 bis 2 : 1, bevorzugt 0,8 : 1 bis 1,5, besonders bevorzugt 0,9 : 1 bis 1,2 : 1 beträgt. Ganz besonders bevorzugt liegt das Verhältnis A : B möglichst nahe an 1 : 1.

Die eingesetzten Monomere (a) bis (e) tragen im Mittel üblicherweise 1,5 bis 2,5, bevorzugt 1,9 bis 2,1, besonders bevorzugt 2,0 Isocyanatgruppen bzw. funktionelle Gruppen, die mit Isocyanaten in einer Additionsreaktion reagieren können.

Die Polyaddition der Komponenten (a) bis (e) zur Herstellung des Polyurethans erfolgt vorzugsweise bei Reaktionstemperaturen von bis zu 180°C, bevorzugt bis zu 150°C unter Normaldruck oder unter autogenem Druck.

Die Herstellung von Polyurethanen, bzw. von wässrigen Polyurethandispersionen ist dem Fachmann bekannt.

Besonders bevorzugt sind wässrige Dispersionen von Polyether-Polyurethan-Elastomeren, wie beispielsweise Luphen® D 259 U (BASF Aktiengesellschaft, DE).

Als weitere polymere Bindemittel, die gegebenenfalls im Gemisch mit Polyurethanen verwendet werden, kommen durch radikalische Polymerisation von ethylenisch ungesättigten Verbindungen (Monomere) erhältliche Polymere in Betracht.

Derartige Polymere bestehen vorzugsweise zu mindestens 40 Gew.-%, bevorzugt zu mindestens 60 Gew.-%, besonders bevorzugt zu mindestens 80 Gew.-% aus sogenannten Hauptmonomeren.

Die Hauptmonomeren sind ausgewählt aus C₁-C₂₀-Alkyl(meth)acrylaten, Vinylestern von bis zu 20 C-Atome enthaltenden Carbonsäuren, Vinylaromaten mit bis zu 20 C-Atomen, ethylenisch ungesättigten Nitrilen, Vinylhalogeniden, Vinylethern von 1 bis 10 C-Atome enthaltenden Alkoholen, aliphatischen Kohlenwasserstoffen mit 2 bis 8 C-Atomen und ein oder zwei Doppelbindungen oder Mischungen dieser Monomeren.

Zu nennen sind beispielsweise (Meth)acrylsäurealkylester mit einem C₁-C₁₀-Alkylrest, wie Methyl-methacrylat, Methylacrylat, n-Butylacrylat, Ethylacrylat und 2-Ethylhexylacrylat.

Insbesondere sind auch Mischungen der (Meth)acrylsäurealkylester geeignet.

Vinylester von Carbonsäuren mit 1 bis 20 C-Atomen sind beispielsweise Vinyllaurat, stearat, Vinylpropionat, Versaticsäurevinylester und Vinylacetat.

Als vinylaromatische Verbindungen kommen Vinyltoluol, α- und p-Methylstyrol, α-Butylstyrol, 4-n-Butylstyrol, 4-n-Decylstyrol und vorzugsweise Styrol in Betracht. Beispiele für Nitrile sind Acrylnitril und Methacrylnitril.

Die Vinylhalogenide sind mit Chlor, Fluor oder Brom substituierte ethylenisch ungesättigte Verbindungen, bevorzugt Vinylchlorid und Vinylidenchlorid.

Als Vinylether zu nennen sind z.B. Vinylmethylether oder Vinylisobutylether. Bevorzugt wird Vinylether von 1 bis 4 C-Atome enthaltenden Alkoholen.

Als Kohlenwasserstoffe mit 2 bis 8 C-Atomen und ein oder zwei olefinischen Doppelbindungen seien Ethylen, Propylen, Butadien, Isopren und Chloropren genannt.

Als Hauptmonomere bevorzugt sind die C₁- bis C₁₀-Alkylacrylate und -methacrylate, insbesondere C₁- bis C₈-Alkylacrylate und -methacrylate und Vinylaromaten, insbesondere Styrol und deren Mischungen.

Ganz besonders bevorzugt sind Methylacrylat, Methylmethacrylat, Ethylacrylat, n-Butylacrylat, n-Hexylacrylat, Octylacrylat und 2-Etyhlhexylacrylat, Styrol sowie Mischungen dieser Monomere.

Neben den Hauptmonomeren kann das Polymer weitere Monomere enthalten, beispielsweise Monomere mit Carbonsäure, Sulfonsäure oder Phosphonsäuregruppen. Bevorzugt sind Carbonsäuregruppen. Genannt seien beispielsweise Acrylsäure, Methacrylsäure, Itacon-säure, Maleinsäure oder Fumarsäure.

Weitere Monomere sind beispielsweise auch Hydroxylgruppen enthaltende Monomere, insbesondere C₁-C₁₀-Hydroxyalkyl(meth)acrylate, (Meth)acrylamid.

Als weitere Monomere seien darüber hinaus Phenyloxyethylglykolmono-(meth-)acrylat, Glycidylacrylat, Glycidylmethacrylat, Amino- (meth-)acrylate wie 2-Aminoethyl-(meth-) acrylat genannt.

Als weitere Monomere seien auch vernetzende Monomere genannt.

Besonders bevorzugt besteht das Polymer zu mindestens 40 Gew.-%, insbesondere mindestens 60 Gew.-% und ganz besonders bevorzugt zu mindestens 80 Gew.-% aus C₁-C₂₀-, insbesondere C₁-C₁₀-Alkyl(meth)acrylaten.

Die Herstellung der Polymere erfolgt in einer bevorzugten Ausführungsform durch Emulsionspolymerisation, es handelt sich daher um ein Emulsionspolymerisat.

Die Herstellung kann jedoch beispielsweise auch durch Lösungspolymerisation und anschließende Dispergierung in Wasser erfolgen.

Polyacrylat-Weichharze (ii) sind beispielsweise synthethische Harze auf Basis von Polyacrylaten mit einem Polyacrylatgehalt von mindestens 60 Gew.-%, vorzugsweise mindestens 80 Gew.-%, besonders bevorzugt 100 Gew.-%.

Die Polyacrylat-Weicharze können durch Lösungsmittelpolymerisation erhalten werden. Als Monomere für die Lösungsmittelpolymerisaton sind Acrylsäure, Methacrylsäure, Acrylsäureester und Methacrylsäureester geeignet, bevorzugt sind Acrylsäure und n-Butylacrylat, besonders bevorzugt ist n-Butylacrylat. Selbstverständlich können auch Mischungen der obengenannten Monomere eingesetzt werden, beispielsweise aus Acrylsäure und n-Butylacrylat.

Die Säurezahl des Polyacrylat-Weichharzes, gemessen nach DIN 53213, beträgt vorzugsweise unter 200 mg KOH/g, besonders bevorzugt unter 100 mg KOH/g.

Das Polyacrylat-Weichharz (ii) hat vorzugsweise einen K-Wert von 1 bis 40, insbesondere von 5 bis 30, besonders bevorzugt von 10 bis 20, gemessen nach DIN ISO 1628-1. Der K-Wert ist ein Maß für das Molekulargewicht und die Viskosität des Polyacrylat-Weichharzes.

Die Glasübergangstemperatur (Tg) des Polyacrylat-Weichharzes (ii) beträgt vorzugsweise -60 bis +10°C, besonders bevorzugt -55 bis 0°C, ganz besonders bevorzugt -55 bis -10°C. Die Glasübergangstemperatur lässt sich nach den üblichen Methoden bestimmen, beispielsweise nach ASTM 3418/82.

Besonders bevorzugte Polyacrylat-Weichharze (ii) sind Polyacrylate auf Basis von n-Butylacrylat, wie beispielsweise acResin® DS 3500 oder Acronal® 4F (BASF Aktiengesellschaft, DE).

Zusätzliche organischer Füllstoffe (iii) sind beispielsweise Harze auf Kohlenwasserstoff- oder Kolophoniumbasis, Tallharz, Balsamharz, Terpene, Oligomere vinylischer Monomere, oligomere Urethane oder Ester, polymere Weichmacher auf Polyesterbasis. sowie Harzdispersionen. Weiter geeignete organische Füllstoffe (iii) sind Schlagzähmodifikatoren, Kunststofffasern oder Kunststoffpulver aus beispielsweise Polyacrylat, Polystyrol, Polyester, Polyamid, Polyurethan, Polyvinylchlorid, Polyolefinen, Polyvinylacetat, Polyisopren, Polyisobutylen oder Blockpolymere davon. Bei den polymeren Weichmachern handelt es sich gemäß DIN 55945 um flüssige oder feste indifferente organische Substanzen mit geringem Dampfdruck. Aufgrund ihres Löse- und Quellvermögens verringern sie die Härte des Vinylpolymeren und ändern sein Haftvermögen.

Ebenfalls zum Einsatz geeignet sind organische Füllstoffpartikel, die sich nicht ohne weiteres zu den wasserlöslichen oder wasserdispergierbaren Polymeren einordnen lassen. Hierzu zählen insbesondere feinvermahlene Kunstoffmehle, wie sie beim Recycling von Kunststoffen anfallen können. Insbesondere zählen hierzu Kunststoffmehle, wie sie aus der Feinvermahlung von hochvernetzten elastomeren oder duromeren Polymeren erhältlich sind. Ein Beispiel hierfür ist Gummimehl, wie es beispielsweise durch Feinvermahlung von Autoreifen entsteht. Kunststofffasern, Schlagzähmodifikatoren, Cellulosefasern, Glasfasern (beispielsweise Wollastonit Marken).

Besonders bevorzugte zusätzliche organische Füllstoffe (iii) sind beispielsweise Aquatac® 6085 B 1 (Arizona Chemical, SE) und Bremasin® 1205 (Lackharzwerke Robert Krämer, DE).

Als anorganische Füllstoffe (iv) eignen sich beispielsweise Füllstoffpartikel aus Andalusit, Silimanit, Kyanit, Mullit, Pyrophylit, Omogolit oder Allophan. Weiterhin geeignet sind Verbindungen auf der Basis von Natriumaluminaten, Silikate, wie z.B. Aluminiumsilikate, Calciumsilikate oder Kieselsäuren (Aerosil) als Thixotropierungsmittel (v). Ebenfalls geeignet sind Mineralien wie Kieselerde, Calciumsulfat (Gips), das nicht aus Rauchgasentschwefelungsanlagen stammt in Form von Anhydrit, Halbhydrat oder Dihydrat, Quarzmehl, Kieselgel, gefälltes oder natürliches Bariumsulfat, Titandioxid, Zeolithe, Leucit, Kalifeldspat, Biotit, die Gruppe der Soro-, Cyclo-, Ino-, Phyllo- und Tectosilikate, die Gruppe der schwer Löslichen Sulfate, wie Gips, Anhydrit oder Schwerspat, sowie Calciummineralien, wie Calcit oder Kreide (CaCO₃).

Die genannten anorganischen Materialien können einzeln aber auch im Gemisch eingesetzt werden. Weitere geeignete Materialien sind gefälltes oder natürliches Kaolin, Talkum, Magnesium- oder Aluminuimhydroxid (zur Einstellung der Brandklasse), Zinkoxid sowie Zirkoniumsalze. Mittels Zugabe von Leichtfüllstoffen - keramischen Mikrohohlkugeln , Glashohlkugeln, Schaumglaskugeln oder sonstigen Leichtfüllstoffen, wie sie beispielsweise von der Fa. Omega-Minerals hergestellt werden, lassen sich Parameter wie Dimensionsstabilität und Dichte beeinflussen.

Ein besonders bevorzugter anorganischer Füllstoff (iv) ist beispielsweise Quarzsand mit einen Korngrößenverteilung von 0,001 bis 0,5 mm, ganz besonders bevorzugt 0,08 bis 0,4 mm, und ein besonders bevorzugtes Thixotropierungsmittel (v) ist beispielsweise Aerosil® 200 (Degussa, DE).

Bei den Verdickungsmitteln (vi) handelt es sich in der Regel um hochmolekulare Stoffe, die entweder Wasser aufsaugen und dabei aufquellen oder intermolekulare Gitterstrukturen bilden. Die organischen Verdickungsmittel gehen schließlich in eine zähflüssige echte oder kolloidale Lösung über.

Das organische Verdickungsmittel enthält ein wässriges System eines Copolymeren auf der Basis von mindestens Acrylsäure und Acrylamid, vorzugsweise emulgiert in einer Ölfraktion, insbesondere in einer Erdölfraktion. Der Feststoffgehalt des Systems beträgt 20 bis 40, insbesondere 24 bis 28 % gemäß DIN 53189 bzw. ISO 1625. Insbesonders bevorzugt verwendet man Collacral®C (BASF Aktiengesellschaft, DE). Die verdickende Wirkung von Collacral®C wird vor allem in alkalischen Bereich, bei einem pH-Wert von 7 bis 10 erreicht.

Verwendet werden können aber auch weitere Verdicker auf Basis von Acrylsäure und Acrylamid (beispielsweise Collacral® HP), carboxlygruppenhaltige Acrylsäureester Copolymere wie Latekoll® D, PU-Verdicker (beispielsweise Collacral® PU 75), Cellulosen und deren Derivate sowie natürliche Verdicker, wie beispielsweise Bentonite, Alginate oder Stärke.

Zur Herstellung emissionsarmer Produkte, die häufig in Innenanwendungen gefordert werden, können auch pulverförmige Verdicker beispielsweise auf Acrylatbasis (beispielsweise Collacral® DS 6254) eingesetzt werden.

Die Verdicker (vi) werden in Mengen von 0,1 bis 1 Gew.-% eingesetzt.

Ein besonders bevorzugter Verdicker (vi) ist beispielsweise Collacral® C (BASF Aktiengesellschaft, DE).

Die Pigmente (vii) dienen dazu die Dichtmasse einzufärben. Bevorzugt sind organische Pigmente und Eisenoxide. Beispiele sind die Luconyl® Typen der BASF Aktiengesellschaft. Die Pigmente werden in Mengen von 0 bis 1 Gew.-% eingesetzt.

Ein besonders bevorzugtes Pigment (vii) ist beispielsweise Luconylblau® 6900 (BASF Aktiengesellschaft, DE).

Zusammenfassend handelt es sich bei der einkomponentigen Dichtmasse im wesentlichen um eine wässrige Polyurethandispersion. Weitere Hilfsstoffe (viii) können in einfacher Weise der wässrigen Dispersion zugesetzt werden.

Zu den weiteren Hilfsstoffen (viii) gehören beispielsweise Konservierungsmittel zur Vermeidung von Pilz- und Bakterienbefall, Lösungsmittel zur Beeinflussung der offenen Zeit und der mechanischen Eigenschaften, beispielsweise Butylglykol, Dispergierhilfen zur Verbesserung des Benetzungsverhaltens, beispielsweise Pigmentverteiler NL (BASF Aktiengesellschaft, DE), Emulgatoren (Emulphor® OPS 25, Lutensol® TO 89), Frostschutzmittel (Ethylenglykol, Propylenglykol). Als Tackifier können kolophonium- oder kohlenwasserstoffbasierte Harze eingesetzt werden. Weitere Hilfsstoffe können sein, Vernetzer, Haftvermittler (Acrylsäure, Silane, Aziridine) oder Entschäumer (Lumiten® Marken).

Die erfindungsgemäße einkomponentige Dichtmasse wird im allgemeinen folgendermaßen hergestellt. Die Dispersion wird vorgelegt. Der pH-Wert der Dispersion sollte in einem Bereich von 5 bis 9, vorzugsweise im Bereich von 7,5 bis 8,5 liegen und wird gegebenenfalls mit Natronlauge bzw. Ammoniak angepasst werden.

Die weiteren Kompenenten (ii) bis (viii) können in dieser Reihenfolge zugesetzt werden. Anschließend wird die Mischung ca. 10 Minuten im Planetenmischer, Horizontaler Turbulent Mischer (Fa. Drais), Planetendissolver bzw. Dissolver (Fa. PC Laborsysteme) gemischt , vorzugsweise bei vermindertem Druck, besonders bevorzugt bei 80 bis 200 mbar.

Die Anwendung der einkomponentigen Dichtmasse ist ohne Spezialgeräte für jedermann leicht möglich.

Die erfindungsgemäße einkomponentige Dichtmasse kann in Kartuschen, Folienbeutel, Eimer, Tuben oder Druckbehälter gemäß TRG 300 verpackt werden.

Die aufgetragene einkomponentige Dichtmasse lässt sich wegen seiner cremigen Konsistenz leicht egalisieren.

Sie kann zum Dichten, Kleben, Beschichten, und Füllen verwendet werden, insbesondere zum Verkleben von Konstruktionen aus Holz, Keramik, Glas, Zement, Metall, Kunststoffen und Kunststofffolien. Die Schichtdicke kann bis zu 30 mm, insbesondere 1 bis 20 mm betragen.

Die Schälhaftung der erfindungsgemäßen einkomponentigen Dichtmassen beträgt im trockenen Zustand vorzugsweise größer 0,2 N/mm, besonders bevorzugt größer 0,5 N/mm. Die Schälhaftung kann beispielsweise nach DIN EN 1939 gemessen werden.

Die erfindungsgemäßen einkomponentigen Dichtmassen sind im trockenen Zustand alterungsbeständig, Die Schälhaftung ist nach einer Lagerung von mindestens zwei Wochen vorzugsweise größer 0,2 N/mm, besonders bevorzugt größer 0,5 N/mm.

Der Anteil an flüchtigen organischen Verunreinigungen in der erfindungsgemäßen Dichtmasse beträgt im nassen Zustand unter 200 Gew.-ppm, vorzugsweise unter 100 Gew.-ppm, besonders bevorzugt unter 50 Gew.-ppm. Flüchtige organische Verbindungen sind organische Verbindungen mit einem Dampfdruck von mindestens 0,1 mbar bei 20°C. Der Gehalt kann gaschromatographisch bestimmt werden.

Die Viskosität der erfindungsgemäßen Dichtmasse beträgt vorzugsweise 50 bis 5000 Pas, besonders bevorzugt 200 bis 1000 Pas. Die Viskosität kann beispielsweise nach DIN EN ISO 3219 gemessen werden.

Der Nasszustand der Dichtmasse ist der Zustand unmittelbar nach der Herstellung bzw. unmittelbar vor der Verwendung. Üblicherweise werden Dichtmassen zwischen Herstellung und Verwendung vor Austrocknung geschützt.

Der Trockenzustand der Dichtmasse ist der Zustand, den die Dichtmasse bei einer Lagerung bei 23°C und einer relativen Feuchte von 50% nach mindestens einer Woche, vorzugsweise nach zwei Wochen, zumindest an ihrer Oberfläche, erreicht. Die Klebrigkeit der trockenen Dichtmasse kann leicht sensorisch durch Berührung geprüft werden, beispielsweise mit einem Finger. Selbstverständlich kann auch der in der Patentanmeldung DE-A-100 00 940 beschriebene Test mit der laufenen Kugel angewendet werden. In diesem Fall beträgt der Weg der Kugel auf der trockenen erfindungsgemäßen Dichtmasse vorzugsweise höchstens 30 cm, besonders bevorzugt höchstens 20 cm.

Die erfindungsgemäßen einkomponentigen Dichtmassen eignen sich besonders zum Abdichten und/oder Anschließen von Materialien, vorzugsweise von Holz, wie beispielsweise Buchenholz, Polyolefinen, wie beispielsweise Polyethylen, Polypropylen und Polyisopren, Polyestern, wie beispielsweise Polykondensate aus Bisphenol A und Phthalsäure, Polyethylenterephthalat und Polyhydroxybenzoat und Faserzementplatten, wie beispielsweise Fulguplan® 160, Internit®, Eternit® Glasal und Eterplan® N (zu beziehen über Rocholl GmbH, DE), besonders bevorzugt von Polyolefinfolien, Polyesterfolien und Faserzementplatten, ganz besonders bevorzugt sind Polyethylenfolien und Faserzementplatten.

Die Verbundstoffe bestehend aus einer Faserzementplatte, einer Polyolefin- und/oder Polyesterfolie und der erfindungsgemäßen einkoponentigen Dichtmasse zeichnen sich nach der Trocknung durch eine hohe Festigkeit und Alterungsbeständigkeit aus.

Die erfindungsgemäßen einkomponentigen Dichtmassen haben eine verbesserte - Schälhaftung, insbesondere auf Faserzementplatten, sind alterungsbeständig, im trockenen Zustand selbstklebend sowie im nassen Zustand weitgehend frei von flüchtigen organische Verbindungen.

Die nachfolgene Beispiele sollen die Erfindung näher erläutern, ohne sie jedoch darauf zu beschränken.

### Beispiel 1:

48 Gewichtteile Luphen® D 259 U (Polyurethandispersion) wurden mit 24 Gewichtsteilen DRT® P 0210 (Harz), 0,05 Gewichtsteilen Luconylblau® 6900 (Pigment), 24,45 Gewichtsteilen Quarzsand der Körngröße 0,08 bis 0,4 mm (Füllstoff), 2,9 Gewichtsteilen Aerosil® 200 (Thixotropierungsmittel) und 0,6 Gewichtsteilen Collacral® C (Verdicker) bei 25° und 100 mbar vermischt.

Auf einer Faserzementplatte Fulguplan® 160 (zu beziehen über Rocholl GmbH, DE) wird eine Fläche von 10x5 cm eingezeichnet. Die zu prüfende Dichtmasse wird mit einem Zahnrakel (2 mm) aufgetragen und mit der Polyester- bzw: Polyethylenfolie belegt. Anschließend wird die Folie mit einem Gewicht von 2,5 kg angerollt. Nach zwei Wochen Lagerung bei 23°C und einer relativen Luftfeuchte von 50% wird mit einer Prüfgeschwindigkeit von 100 mm/min (Rollenschälgerät) geprüft.
Luphen® D 259 U ist eine wässrige Dispersion eines Polyether-Polyurethan-Elastomers der BASF Aktiengesellschaft
Luconylblau® 6900 ist ein Pigment der BASF Aktiengesellschaft
Aerosil® 200 ist ein Siliciumdioxidpulver der Degussa
Collacral® C ist ein in einer aliphatischen Erdölfraktion emulgiertes Acrylsäure-Acrylamid-Copolymer der BASF Aktiengesellschaft

### Beispiel 2:

40 Gewichtteile Luphen® D 259 U (Polyurethandispersion) wurden mit 20 Gewichtsteilen Aquatac® 6085 B 1 (Harz), 15,35 Gewichtsteilen Bremasin® 1205 (Harz), 0,65 Gewichtsteilen Luconylblau® 6900 (Pigment), 20,65 Gewichtsteilen Quarzsand der Körngröße 0,08 bis 0,4 mm (Füllstoff), 2,65 Gewichtsteilen Aerosil® 200 (Thixotropierungsmittel) und 0,7 Gewichtsteilen Collacral® C (Verdicker) bei 25° und 100 mbar vermischt.

Die Schälhaftung wurde analog zu Beispiel 1 geprüft.
Aquatac® 6085 B 1 ist eine Harzdispersion der Arizona Chemical
Bremasin® 1205 ist ein Flüssigharz der Lackharzwerke Robert Krämer

### Beispiel 3:

40 Gewichtteile Luphen® D 259 U (Polyurethandispersion) wurden mit 20 Gewichtsteilen Aquatac® 6085 B 1 (Harz), 15,35 Gewichtsteilen acResin® DS 3500 (Acrylat-Weichharz), 0,05 Gewichtsteilen Luconylblau® 6900 (Pigment), 21,25 Gewichtsteilen Quarzsand der Körngröße 0,08 bis 0,4 mm (Füllstoff), 2,65 Gewichtsteilen Aerosil® 200 (Thixotropierungsmittel) und 0,7 Gewichtsteilen Collacral® C (Verdicker) bei 25° und 100 mbar vermischt.

Die Schälhaftung wurde analog zu Beispiel 1 geprüft.
acResin® DS 3500 ist ein carboxylgruppenhaltiges Polybutylacrylat der BASF Aktiengesellchaft

### Beispiel 4 (Vergleichsbeispiel):

Analog zu Beispiel 1 wurde die Schälhaftung von Siga Primur® (Sigu Cover AG, CH), einer Dichtmasse auf Basis einer Polyacrylatdispersion gemäß DE-A-100 00 940, geprüft.

**Tabelle 1:**

| Beispiel | Schälhaftung mit Polyethylenfolie [N/mm] | Schälhaftung mit Polyesterfolie [N/mm] |
|---|---|---|
| 1 | 0,21 | 0,06 |
| 2 | 0,77 | 1,11 |
| 3 | 1,01 | 0,30 |
| 4 | 0,20 | 0,09 |

## Patentansprüche

1. Einkomponentige Dichtmasse auf Basis einer Polyurethandispersion enthaltend
I. 35 bis 50 Gew.-%, wenigstens einer Polyurethandispersion
ii. 5 bis 20 Gew.-%, eines oder mehrerer Polyacrylat-Weichharze als organischen Füllstoff,
iii. 15 bis 40 Gew.-%, eines oder mehrerer zusätzlicher organischer Füllstoffe,
iv. 20 bis 30 Gew.-%, eines oder mehrerer anorganischer Füllstoffe,
v. 2 bis 3 Gew.-%, eines oder mehrerer zusätzlicher anorganischer Füllstoffe als Thixotropierungsmittel,
vi. 0,1 bis 1 Gew.-%, eines oder mehrerer Verdicker
vii. 0 bis 1 Gew.-%, eines oder mehrerer Pigmente und
viii. 0 bis 5 Gew.-% weitere Hilfsstoffe,
wobei das Verhältnis von i zu (ii+iii+iv) 0,6 bis 1 beträgt.

2. Dichtmasse gemäß Anspruch 1, wobei der Gehalt an flüchtigen organischen Verbindungen im nassen Zustand weniger als 100 Gew.-ppm beträgt.

3. Dichtmasse gemäß einem der Ansprüche 1 und 2, welche im trockenen Zustand eine Schälhaftung von mehr als 0,2 N/mm aufweist.

4. Dichtmasse gemäß einem der Ansprüche 1 bis 3, wobei die Polyurethandispersion einen Feststoffgehalt von 30 bis 70 Gew.-% hat.

5. Dichtmasse gemäß einem der Ansprüche 1 bis 4, welche einen pH-Wert von 5 bis 9 aufweist.

6. Dichtmasse gemäß einem der Ansprüche 1 bis 5, welche im nassen Zustand bei 23°C eine Viskosität von mindestens 50 Pas aufweist.

7. Verbundstoff aus Holz und/oder einer Faserzementplatte, einer Dichtmasse gemäß einem der Ansprüche 1 bis 6 und einer Polyolefin- und/oder Polyesterfolie.

8. Verwendung der einkomponentigen Dichtmasse gemäß einem der Anprüche 1 bis 6 zum Abdichten und/oder Anschließen von Materialien.

9. Verwendung gemäß Anspruch 8, wobei eines der Materialien ein Polyolefin, ein Polyester, eine Polyolefinfolie oder Polyesterfolie ist.

10. Verwendung gemäß einem der Ansprüche 8 und 9, wobei eines der Materialien Holz oder Faserzement ist.

## Claims

1. A one-component sealant based on a polyurethane dispersion containing
i. 35% to 50% by weight of at least one polyurethane dispersion,
ii. 5% to 20% by weight of one or more plasticizing polyacrylates resins as organic filler,
iii. 15% to 40% by weight of one or more additional organic fillers,
iv. 20% to 30% by weight of one or more inorganic fillers,
v. 2% to 3% by weight of one or more additional inorganic fillers as thixotropic agents,
vi. 0.1% to 1% by weight of one or more thickeners,
vii. 0% to 1% by weight of one or more pigments, and
viii. 0% to 5% by weight of further auxiliaries,
the ratio of i to (ii + iii + iv) being from 0.6 to 1.

2. The sealant according to claim 1, wherein the amount of volatile organic compounds in the wet state is less than 100 ppm by weight.

3. The sealant according to one of claims 1 and 2, which in the dry state has a peel adhesion of more than 0.2 N/mm.

4. The sealant according to any one of claims 1 to 3, wherein the polyurethane dispersion has a solids content of 30% to 70% by weight.

5. The sealant according to any one of claims 1 to 4, which has a pH of 5 to 9.

6. The sealant according to any one of claims 1 to 5, which in the wet state at 23°C has a viscosity of at least 50 Pas.

7. A composite comprising wood and/or a fiber cement slab, a sealant according to any one of claims 1 to 6, and a polyolefin film and/or polyester film.

8. The use of the one-component sealant according to any one of claims 1 to 6 for sealing and/or joining materials.

9. The use according to claim 8, wherein one of the materials is a polyolefin, a polyester, a polyolefin film or polyester film.

10. The use according to one of Claims 8 and 9, wherein one of the materials is wood or fiber cement.

## Revendications

1. Masse d'étanchéité à composant unique à base d'une dispersion de polyuréthanne contenant :
i. 35 à 50% en poids d'au moins une dispersion de polyuréthanne,
ii. 5 à 20% en poids d'une ou plusieurs résines souples de polyacrylate comme charge organique,
iii. 15 à 40% en poids d'une ou plusieurs charges organiques supplémentaires,
iv. 20 à 30% en poids d'une ou plusieurs charges inorganiques,
v. 2 à 3% en poids d'une ou plusieurs charges inorganiques supplémentaires comme agent thixotrope,
vi. 0,1 à 1% en poids d'un ou plusieurs épaississants,
vii. 0 à 1% en poids d'un ou plusieurs pigments, et
viii. 0 à 5% en poids d'autres adjuvants,
le rapport de i à (ii + iii + iv) étant de 0,6 à 1.

2. Masse d'étanchéité selon la revendication 1, dans laquelle la teneur en composés organiques volatils est, à l'état humide, inférieure à 100 ppm en poids.

3. Masse d'étanchéité selon l'une quelconque des revendications 1 et 2, qui présente, à l'état sec, une adhérence à l'arrachage supérieure à 0,2 N/mm.

4. Masse d'étanchéité selon l'une quelconque des revendications 1 à 3, dans laquelle la dispersion de polyuréthanne présente une teneur en solides de 30 à 70% en poids.

5. Masse d'étanchéité selon l'une quelconque des revendications 1 à 4, qui présente une valeur de pH de 5 à 9.

6. Masse d'étanchéité selon l'une quelconque des revendications 1 à 5, qui présente, à l'état mouillé à 23°C, une viscosité d'au moins 50 Pa.s.

7. Matériau composite constitué de bois et/ou d'une plaque en fibrociment, d'une masse d'étanchéité selon l'une quelconque des revendications 1 à 6, et d'une feuille de polyoléfine et/ou de polyester.

8. Utilisation de la masse d'étanchéité à composant unique selon l'une quelconque des revendications 1 à 6 pour étancher et/ou raccorder des matériaux.

9. Utilisation selon la revendication 8, dans laquelle un des matériaux est une polyoléfine, un polyester, une feuille de polyoléfine ou une feuille de polyester.

10. Utilisation selon l'une quelconque des revendications 8 et 9, dans laquelle l'un des matériaux est du bois ou du fibrociment.
